(19) Europäisches Patentamt / European Patent Office / Office européen des brevets

(11) **EP 4 196 380 B1**

(12) **FASCICULE DE BREVET EUROPEEN**

(45) Date de publication et mention
de la délivrance du brevet:
**15.04.2026 Bulletin 2026/16**

(21) Numéro de dépôt: **21748897.2**

(22) Date de dépôt: **27.07.2021**

(51) Classification Internationale des Brevets (IPC):
**B60W 30/16** *(2020.01)*    **B60W 30/18** *(2012.01)*
**B60W 50/00** *(2006.01)*    **B60W 30/14** *(2006.01)*

(52) Classification Coopérative des Brevets (CPC):
**B60W 30/16; B60W 30/143; B60W 30/18009;
B60W 50/0097;** B60W 2554/4043;
B60W 2554/4045; B60W 2554/802;
B60W 2554/803; B60W 2554/804; B60W 2720/10

(86) Numéro de dépôt international:
**PCT/EP2021/070929**

(87) Numéro de publication internationale:
**WO 2022/033861 (17.02.2022 Gazette 2022/07)**

(54) **PROCÉDÉ DE GESTION AUTOMATISÉE DE LA VITESSE LONGITUDINALE D'UN VÉHICULE**

VERFAHREN ZUR AUTOMATISIERTEN STEUERUNG DER LÄNGSGESCHWINDIGKEIT EINES FAHRZEUGS

METHOD FOR AUTOMATED MANAGEMENT OF THE LONGITUDINAL SPEED OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.08.2020 FR 2008464**

(43) Date de publication de la demande:
**21.06.2023 Bulletin 2023/25**

(73) Titulaire: **Ampere SAS
92100 Boulogne-Billancourt (FR)**

(72) Inventeurs:
• **KVIESKA, Pedro
78000 Versailles (FR)**
• **PITA-GIL, Guillermo
7800 VERSAILLES (FR)**

(74) Mandataire: **Renault Group
Renault s.a.s.
1 avenue du Golf
FR TCR AVA 055
78084 Guyancourt Cedex (FR)**

(56) Documents cités:
WO-A1-2020/157407      WO-A1-99/20481
DE-T5- 112018 001 201    US-A1- 2017 305 422
US-A1- 2020 189 592

**Description**

L'invention concerne un procédé de gestion automatisée de la vitesse longitudinale d'un véhicule. L'invention porte encore sur un dispositif de gestion automatisée de la vitesse longitudinale d'un véhicule. L'invention porte également sur un véhicule automobile comprenant un tel dispositif de gestion automatisée, sur un produit programme d'ordinateur correspondant et sur un support d'enregistrement d'un tel programme d'ordinateur.

Les technologies d'assistance à la conduite sont de plus en plus répandues et ne sont plus limitées aux véhicules haut de gamme.

Ces technologies permettent de simplifier la conduite des véhicules automobiles et/ou de fiabiliser les comportements des conducteurs des véhicules.

Des systèmes de gestion automatisée de la vitesse sont couramment installés sur les véhicules actuels, fonctionnant généralement sur la base d'une régulation de distance entre le véhicule équipé, appelé aussi véhicule ego, et celui qui le précède dans sa voie de circulation, appelé cible.

Certains systèmes de gestion automatisée de la vitesse prennent également en compte des cibles effectuant une manœuvre d'insertion, avant que leur insertion sur la voie du véhicule ego ne soit effective, cf. par exemple à DE 11 2018 001201 T5 et US 2017/305422 A1. Toutefois l'anticipation de la régulation de vitesse sur une cible entrante sur la voie du véhicule ego peut générer un inconfort dans la conduite.

Le but de l'invention est de fournir un système et un procédé de gestion automatisée de la vitesse longitudinale d'un véhicule qui remédie aux inconvénients ci-dessus.

Un premier objet de l'invention est un procédé de gestion de la vitesse longitudinale qui produise une régulation confortable et sécurisante pour les passagers du véhicule selon la revendication 1.

A cet effet, l'invention porte sur un procédé de gestion automatisée de la vitesse longitudinale d'un premier véhicule circulant sur une première voie.

Le procédé comprend les étapes suivantes :

- une première étape de détection d'une intention d'un deuxième véhicule circulant sur une deuxième voie adjacente à la première voie d'effectuer une manœuvre d'insertion sur la première voie,
- une deuxième étape d'estimation d'une distance longitudinale corrigée, la distance longitudinale corrigée correspondant à la distance longitudinale qui séparera le premier véhicule du deuxième véhicule à la fin de la manœuvre d'insertion, la distance longitudinale corrigée étant calculée en fonction d'une distance longitudinale mesurée entre le premier véhicule et le deuxième véhicule, et en fonction d'une vitesse longitudinale relative mesurée entre le deuxième véhicule et le premier véhicule,
- une troisième étape de calcul d'une consigne de vitesse longitudinale du premier véhicule en fonction de la distance longitudinale corrigée.

La première étape de détection comprend une sous-étape de calcul d'un délai avant franchissement de ligne, puis une sous-étape de comparaison du délai avant franchissement de ligne avec un seuil prédéfini.

La distance longitudinale corrigée calculée lors de la deuxième étape est fonction de la distance longitudinale mesurée, de la vitesse longitudinale relative mesurée et du délai avant franchissement.

La distance longitudinale corrigée calculée lors de la deuxième étape peut être égale à la somme de la distance longitudinale mesurée et du produit de la vitesse longitudinale relative mesurée par le délai avant franchissement.

La première étape de détection peut comprendre une sous-étape de détection d'indicateurs visuels sur le deuxième véhicule signalant une manœuvre d'insertion, notamment une détection d'un usage de feux clignotants.

Le procédé peut comprendre une étape de comparaison de la vitesse du premier véhicule et de la vitesse du deuxième véhicule, la consigne de vitesse longitudinale calculée lors de la troisième étape étant une consigne de décélération forte si la vitesse du deuxième véhicule est strictement inférieure à la vitesse du premier véhicule, et la consigne de vitesse longitudinale calculée lors de la troisième étape étant une consigne de décélération faible si la vitesse du deuxième véhicule est strictement supérieure à la vitesse du premier véhicule.

Le procédé peut comprendre :

- une étape de calcul d'une première vitesse longitudinale de référence en fonction de la distance longitudinale corrigée,
- une étape de détection d'au moins un troisième véhicule dans un trafic environnant le premier véhicule,
- une étape de calcul d'au moins une deuxième vitesse longitudinale de référence en fonction de la vitesse de l'au moins troisième véhicule,

La consigne de vitesse longitudinale calculée lors de la troisième étape peut être égale au minimum entre la première vitesse longitudinale de référence et l'au moins deuxième vitesse longitudinale de référence.

Le deuxième véhicule et l'au moins troisième véhicule peuvent être situés à l'avant du premier véhicule.

L'invention porte aussi sur un dispositif permettant une gestion automatisée de la vitesse longitudinale d'un véhicule, le dispositif comprenant des éléments matériels et/ou logiciels mettant en œuvre un procédé tel que défini précédemment.

L'invention porte aussi sur un véhicule automobile comprenant un dispositif de gestion automatisée de la vitesse longitudinale d'un véhicule tel que défini précédemment.

L'invention porte également sur un produit programme d'ordinateur comprenant des instructions de code de programme enregistrées sur un support lisible par ordinateur pour mettre en œuvre les étapes du procédé défini précédemment lorsque ledit programme fonctionne sur un ordinateur et/ou sur un produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par l'ordinateur, conduisent celui-ci à mettre en œuvre le procédé défini précédemment.

L'invention porte également sur un support d'enregistrement de données, lisible par un ordinateur, sur lequel est enregistré un programme d'ordinateur comprenant des instructions de code de programme de mise en œuvre du procédé défini précédemment et/ou sur un support d'enregistrement lisible par ordinateur comprenant des instructions qui, lorsqu'elles sont exécutées par un ordinateur, conduisent celui-ci à mettre en œuvre le procédé défini précédemment.

L'invention porte également sur un signal d'un support de données portant le produit programme d'ordinateur défini précédemment.

Le dessin annexé représente, à titre d'exemple, un mode de réalisation d'un dispositif de gestion automatisée de la vitesse longitudinale selon l'invention et un mode d'exécution d'un procédé de gestion automatisée de la vitesse longitudinale selon l'invention.

[Fig. 1] La figure 1 représente schématiquement un mode de réalisation d'un véhicule équipé d'un moyen de mise en œuvre d'un procédé de gestion automatisée de la vitesse longitudinale d'un véhicule automobile.

[Fig. 2] La figure 2 représente schématiquement une première configuration de trafic prise en compte par le procédé de gestion de vitesse longitudinale d'un véhicule automobile.

[Fig. 3] La figure 3 illustre un déroulement temporel d'une manœuvre d'insertion.

[Fig. 4] La figure 4 est un ordinogramme d'un premier mode d'exécution d'un procédé de gestion automatisée de la vitesse longitudinale d'un véhicule automobile.

[Fig. 5] La figure 5 est un ordinogramme d'un second mode d'exécution d'un procédé de gestion automatisée de la vitesse longitudinale d'un véhicule automobile.

[Fig. 6] La figure 6 illustre la mise en œuvre du procédé dans une première configuration de trafic.

[Fig. 7] La figure 7 illustre la mise en œuvre du procédé dans une deuxième configuration de trafic.

[Fig. 8] La figure 8 représente schématiquement une deuxième configuration de trafic prise en compte par le procédé de gestion de vitesse longitudinale d'un véhicule automobile.

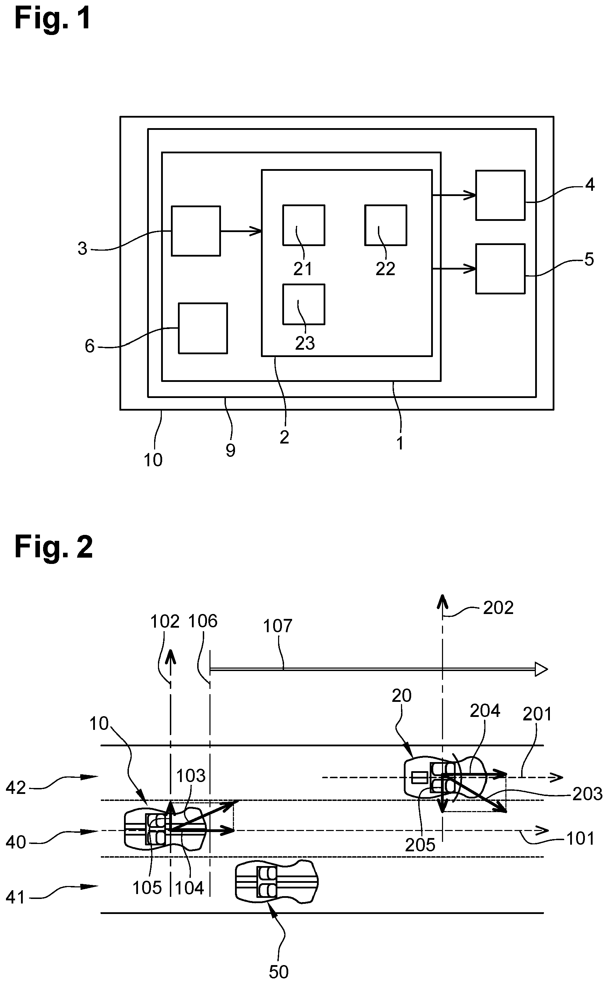

Un mode de réalisation d'un véhicule équipé d'un moyen de mise en œuvre d'un procédé de gestion automatisée de la vitesse longitudinale est décrit ci-après en référence à la figure 1.

Le véhicule automobile 10 est un véhicule automobile de n'importe quel type, notamment un véhicule de tourisme ou un véhicule utilitaire. Dans cette description d'un mode de réalisation, le véhicule comprenant les moyens de mise en œuvre de l'invention est dénommé véhicule "ego". Cette appellation permet uniquement de le distinguer d'autres véhicules environnants et ne confère en soi aucune limitation technique au véhicule automobile 10.

Le premier véhicule automobile 10 ou véhicule ego 10 comprend un système 1 de gestion automatisée de la vitesse longitudinale d'un véhicule automobile.

Le système 1 de gestion automatisée de la vitesse longitudinale d'un véhicule automobile peut faire partie d'un système plus global d'aide à la conduite 9.

Le système 1 de gestion automatisée de la vitesse longitudinale d'un véhicule automobile comprend principalement les éléments suivants :

- un moyen de détection 3 des véhicules circulant sur la voie du véhicule automobile 10, dite voie principale, et sur les voies de circulation dites adjacentes situées de part et d'autre de la voie principale,
- un microprocesseur 2,
- une mémoire 6.

Le système 1 de gestion automatisée de la vitesse longitudinale d'un véhicule automobile, et particulièrement le microprocesseur 2, comprend principalement les modules suivants :

- un module de détection 21 d'une intention d'un deuxième véhicule circulant sur une deuxième voie adjacente à la première voie, d'effectuer une manœuvre d'insertion sur la première voie, ce module pouvant coopérer avec le moyen de détection 3,

- un module d'estimation 22 d'une distance longitudinale corrigée qui séparera le véhicule ego 10 du deuxième véhicule à la fin de la manœuvre d'insertion, ce module pouvant coopérer avec le moyen de détection 3,
- un module de calcul 23 d'une consigne de vitesse longitudinale du véhicule ego en fonction de ladite distance longitudinale corrigée, ce module pouvant coopérer avec le moyen de détection .

Le véhicule automobile 10, en particulier le système 1 de gestion automatisée de la vitesse longitudinale d'un véhicule automobile, comprend de préférence tous les éléments matériels et/ou logiciels configurés de sorte à mettre en œuvre le procédé défini dans l'objet de l'invention ou le procédé décrit plus bas.

Le moyen de détection 3 peut comprendre par exemple un radar, et/ou un lidar, et/ou une caméra et/ou tout autre type de capteur adapté à détecter des cibles dans l'environnement du véhicule ego.

Le moyen de détection 3 peut fournir des mesures au microprocesseur 2, parmi lesquelles :

- la distance longitudinale entre le véhicule ego et les véhicules environnants,
- les vitesses longitudinale et latérale des véhicules environnants,
- l'accélération longitudinale et latérale des véhicules environnants, et
- la vitesse longitudinale relative des véhicules environnants par rapport au véhicule ego.

En variante, une partie de ces mesures pourraient être calculées par le microprocesseur sur la base de mesures fournies par le moyen de détection 3. Ces mesures peuvent être répétées indéfiniment selon une fréquence donnée.

En outre, le microprocesseur 2 peut également recevoir une information portant la vitesse longitudinale du véhicule ego, par exemple au moyen de capteurs de vitesse du véhicule ego relié au système 1. Le microprocesseur 2 peut également recevoir une information portant la distance latérale entre le véhicule ego et des véhicules environnants et/ou des informations permettant de positionner le véhicule ego dans un référentiel, notamment de positionner le véhicule ego par rapport à des lignes de démarcation.

Le module 23 de calcul d'une consigne de vitesse longitudinale est apte à transmettre des ordres de commande à un moteur 4 ou à un système de freinage 5 du véhicule de sorte à contrôler la vitesse longitudinale du véhicule ego.

Le système 1 de gestion automatisée de la vitesse longitudinale d'un véhicule automobile comprend une mémoire 6. La mémoire 6 constitue un support d'enregistrement lisible par un ordinateur ou par le calculateur comprenant des instructions qui, lorsqu'elles sont exécutées par l'ordinateur ou le calculateur, conduisent celui-ci à mettre en œuvre un procédé de gestion automatisée de la vitesse longitudinale selon un mode de réalisation de l'invention.

En référence à la figure 2, on suppose que le véhicule ego 10 circule sur une chaussée contenant au moins deux voies de circulation dans le même sens. Dans l'exemple illustré dans la figure 2, le véhicule ego 10 est positionné sur la voie centrale 40 d'une route à trois voies. Deux voies de circulation 41, 42 sont donc adjacentes à la voie centrale 40 et se situent de part et d'autre de cette dernière.

En référence à la figure 2, on définit la terminologie utilisée dans la suite du document :

- L'axe dit axe longitudinal 101 du véhicule ego est défini comme un axe de symétrie du véhicule ego parallèle à l'axe selon lequel le véhicule se déplace en ligne droite, orienté vers l'avant du véhicule.
- L'axe dit axe latéral 102 du véhicule ego coupe perpendiculairement l'axe longitudinal 101 en un point situé au centre de gravité du véhicule ego, et il est orienté vers la gauche du véhicule ego, la gauche et la droite étant définies selon le point de vue du conducteur.
- Le vecteur vitesse 103 du véhicule ego en projection sur l'axe longitudinal 101 définit la composante longitudinale 104 du vecteur vitesse, dite vitesse longitudinale.
- Le vecteur vitesse 103 du véhicule ego en projection sur l'axe latéral 102 définit la composante latérale 105 du vecteur vitesse, dite vitesse latérale.
- De même, une distance entre deux véhicules peut être projetée sur les axes longitudinal et latéral, définissant ainsi une distance longitudinale et une distance latérale.
- Par convention, un véhicule sera considéré comme situé à l'avant du véhicule ego s'il se trouve au moins partiellement (par exemple au moins à 50%) dans l'hémi-espace délimité par un axe 106 parallèle à l'axe latéral 102 et passant par l'extrémité avant du pare-chocs avant du véhicule ego et orienté dans la direction de l'axe 101. Cet hémi-espace correspond donc à une zone 107 dite de trafic situé à l'avant du véhicule ego.
- La voie de circulation du véhicule ego 40 est dite voie principale.
- Les voies de circulation 41 et 42 adjacentes à la voie principale et situées de part et d'autre de cette voie sont dites voies adjacentes.

La même terminologie est appliquée pour définir les paramètres de position et de vitesse d'un deuxième véhicule 20, représenté dans la figure 2. Ce deuxième véhicule 20 est caractérisé par le fait qu'il se situe dans le trafic environnant du véhicule ego, plus particulièrement qu'il circule sur une voie adjacente 41, 42 et que ses paramètres de trajectoire (parmi lesquels la position et la vitesse) sont pris en compte dans le calcul de la vitesse longitudinale de consigne du véhicule ego. Dans la suite du document, on pourra désigner indifféremment ce deuxième véhicule 20 par le terme de véhicule cible 20.

Un véhicule cible peut être un véhicule automobile de n'importe quel type, notamment un véhicule de tourisme ou un véhicule utilitaire ou encore une moto.

Les paramètres de position et de vitesse du véhicule cible 20 sont définis comme suit, en référence à la figure 2 :

- l'axe dit axe longitudinal 201 du véhicule cible 20 est défini comme son axe de symétrie longitudinal, orienté vers l'avant du véhicule.
- L'axe dit axe latéral 202 du véhicule cible 20 coupe perpendiculairement l'axe longitudinal 201 en un point situé au centre de gravité du véhicule cible, et il est orienté vers la gauche du véhicule cible.
- Le vecteur vitesse 203 du véhicule cible 20 en projection sur l'axe longitudinal 201 définit la composante longitudinale 204 du vecteur vitesse, dite vitesse longitudinale.
- Le vecteur vitesse 203 du véhicule cible 20 en projection sur l'axe latéral 202 définit la composante latérale 205 du vecteur vitesse, dite vitesse latérale.

Dans la suite du document, on désigne par « manœuvre d'insertion » (dite manœuvre de « cut-in » en anglais) une séquence de conduite permettant à un véhicule cible 20, 50 circulant sur une voie adjacente 41, 42, de s'insérer devant le véhicule ego, dans le trafic de la voie de circulation principale 40.

Dans la suite du document, on désigne par « couloir de circulation du véhicule ego » une zone de la voie de circulation du véhicule ego délimitée latéralement par deux lignes fictives parallèles à l'axe longitudinal du véhicule ego, ces deux lignes étant équidistantes de l'axe longitudinal du véhicule ego. Dans un mode de réalisation, le couloir de circulation peut être défini comme la projection longitudinale du véhicule ego sur sa voie de circulation. Dans ce monde de réalisation, la largeur du couloir de circulation correspond donc à la largeur du véhicule ego. Dans un mode de réalisation alternatif, la largeur du couloir de circulation du véhicule ego pourrait être différente de la largeur du véhicule ego, préférentiellement supérieure à cette dernière. Dans ce mode de réalisation, la largeur du couloir de circulation peut par exemple définir une marge de 30cm de chaque côté du véhicule ego.

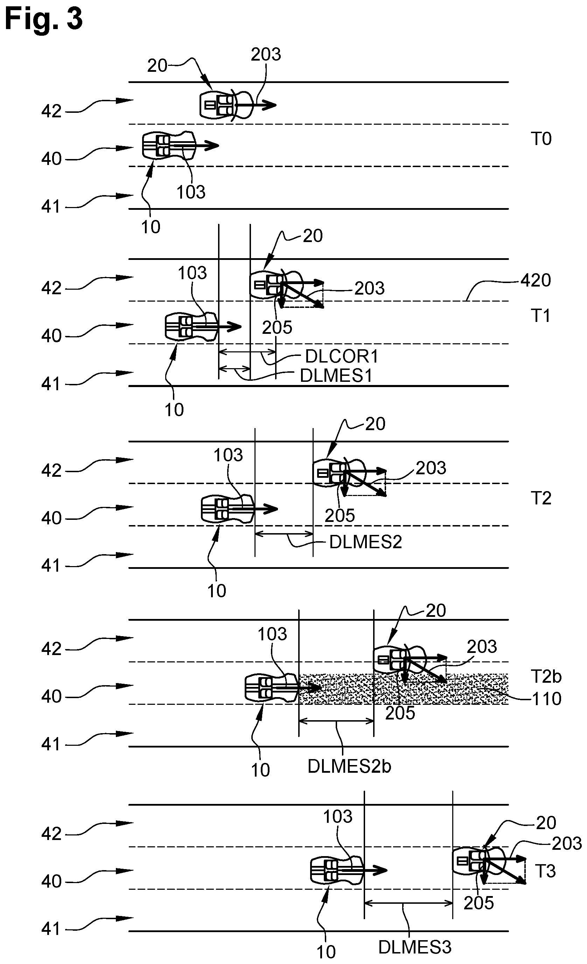

La figure 3 représente les temps clés d'une manœuvre d'insertion d'un véhicule cible 20 sur la voie du véhicule ego 10 :

- A l'instant T0, le véhicule cible 20 dépasse le véhicule ego 10. Sa vitesse est alors purement longitudinale. Son intention d'effectuer une manœuvre d'insertion n'est donc pas détectable à travers ses paramètres de conduite : sa vitesse latérale et son accélération latérale sont très faibles et sa trajectoire reste centrée sur sa voie de circulation 42. A ce stade, le véhicule cible 20 peut manifester son intention d'effectuer une manœuvre d'insertion, par exemple à l'aide d'indicateurs visuels (feux clignotants).
- A l'instant T1, le véhicule cible 20 présente une vitesse latérale 205 non nulle et éventuellement une accélération latérale non nulle. Il s'est donc rapproché de la ligne de démarcation 420 située entre la voie du véhicule ego et celle du véhicule cible. A ce stade, les paramètres de conduite du véhicule cible 20 permettent au véhicule ego de détecter une intention de manœuvre d'insertion du véhicule cible 20 sur la voie du véhicule ego.
- A l'instant T2, le véhicule cible 20 franchit la ligne de démarcation qui sépare sa voie de celle du véhicule ego.
- A l'instant T2b, le véhicule cible 20 pénètre dans un couloir de circulation 110 centré sur l'axe longitudinal du véhicule ego 10.
- A l'instant T3, le véhicule cible 20 se situe entièrement dans la voie de circulation du véhicule ego.

Le critère établissant un franchissement de ligne par un véhicule peut être défini comme étant le franchissement de cette ligne par au moins un point des parties suivantes du véhicule :

- le bord latéral de la caisse de ce véhicule, ce bord latéral étant le plus proche du véhicule ego, ou
- le bord latéral d'au moins une des roues de ce véhicule, ou
- le centre de gravité de ce véhicule.

Alternativement, le critère établissant un franchissement de ligne par un véhicule peut être défini comme étant le franchissement de cette ligne par la totalité de ce véhicule.

Préférentiellement, le critère de franchissement est défini comme étant le franchissement de cette ligne par au moins un point d'un bord latéral de la caisse de ce véhicule.

Dans la suite du document, l'expression « fin de la manœuvre d'insertion » peut désigner l'instant T3 à partir duquel le véhicule cible 20 se situe entièrement sur la voie de circulation du véhicule ego. Préférentiellement, la fin de la manœuvre d'insertion peut être vue comme l'instant T2b où le véhicule cible 20 pénètre dans un couloir de circulation centré sur l'axe longitudinal du véhicule ego. Selon une autre variante de réalisation, la fin de la manœuvre d'insertion pourrait aussi être vue comme l'instant T2 de franchissement de la ligne de démarcation.

Un premier mode d'exécution d'un procédé de gestion automatisée de la vitesse longitudinale est décrit ci-après en référence à la figure 3. Le procédé de gestion peut aussi être vu comme étant un procédé de fonctionnement d'un système de gestion ou comme un procédé de fonctionnement d'un véhicule automobile équipé d'un système de gestion. Ce premier mode d'exécution du procédé comprend trois étapes E1, E2 et E3 qui vont être détaillées par la suite.

Dans une première étape E1, on détecte une intention d'un véhicule cible 20, circulant sur une voie adjacente 41, d'effectuer une manœuvre d'insertion sur la voie principale 40.

En référence à la figure 3 précédemment décrite, la détection d'une intention d'effectuer une manœuvre d'insertion peut intervenir entre le temps T0 et le temps T1. En effet, comme illustré au temps T0, la détection d'une intention d'effectuer une manœuvre d'insertion peut faire intervenir la détection de feux clignotants avant même que le véhicule ne commence à manœuvrer, c'est-à-dire avant que le véhicule cible 20 ne commence à se rapprocher de la ligne de démarcation 420 située entre sa voie de circulation 42 et celle du véhicule ego 40.

En complément ou alternativement, la détection d'une intention d'effectuer une manœuvre d'insertion peut intervenir à un temps T1 où le véhicule cible a initié un déplacement latéral vers la ligne de démarcation 420. Dans ce cas, la détection d'une intention d'effectuer une manœuvre d'insertion fait intervenir des paramètres de trajectoire du véhicule cible 20. Dans le cas de véhicules circulant sur des voies rectilignes, le début de la manœuvre d'insertion se matérialise par une augmentation de la vitesse latérale 205 et éventuellement de l'accélération latérale du véhicule cible 20. Le procédé peut donc exploiter les données issues du moyen de détection 3 pour comparer la vitesse latérale et/ou l'accélération latérale du véhicule cible 20 à des seuils minimum.

En complément ou alternativement, le procédé utilise les données de trajectoire du véhicule cible 20 pour estimer un délai avant franchissement de ligne TLC (acronyme de l'expression anglaise « Time to Line Crossing »), correspondant au délai à l'issue duquel le véhicule cible 20 franchira une limite située entre le véhicule ego et le véhicule cible.

Dans un mode de réalisation préférentiel, le TLC est relatif au franchissement d'une limite latérale d'un couloir de circulation 110 centré sur l'axe longitudinal du véhicule ego 10. Le calibrage de la largeur de ce couloir permet d'affiner l'estimation du moment où la trajectoire du véhicule cible 20 croisera effectivement celle du véhicule ego.

De préférence, la largeur du couloir 110 est donc supérieure à la largeur du véhicule ego et inférieure à la largeur d'une voie de circulation d'autoroute.

Sur la base de l'une ou l'autre des options de calcul d'un délai TLC, le procédé détecte une intention d'effectuer une manœuvre d'insertion par comparaison du délai TLC à un seuil maximal, par exemple 1,5 secondes.

Dans une variante de mise en œuvre, le procédé combine les conditions précédemment présentées afin de détecter une intention d'effectuer une manœuvre d'insertion.

Selon une autre variante, une intention d'effectuer une manœuvre d'insertion pourrait être détectée au moyen d'un dispositif de communication entre véhicule et/ou au moyen d'un dispositif de communication avec un serveur distant et/ou au moyen d'un dispositif de géolocalisation.

A un instant donné, le procédé détecte une intention d'effectuer une manœuvre d'insertion et enchaine sur une deuxième étape E2 d'estimation d'une distance longitudinale corrigée DLCOR.

La distance longitudinale corrigée DLCOR correspond à une estimation de la distance longitudinale qui séparera le véhicule ego 10 du véhicule cible 20 à la fin de la manœuvre d'insertion.

Par exemple, en référence à la figure 3, l'instant de détection d'une intention d'effectuer une manœuvre d'insertion est T1. A l'instant T1, on estime une distance longitudinale corrigée DLCOR1, dont la signification dépend du critère choisi pour le calcul du TLC :

- si le TLC est calculé selon un critère de franchissement de la ligne de démarcation entre les voies 40 et 42, alors TLC=T2 et DLCOR1 sera une estimation de la distance DLMES2 qui séparera le véhicule ego 10 du véhicule cible 20 à l'instant T2,
- si le TLC est calculé selon un critère de pénétration du véhicule cible 20 dans un couloir de circulation centré sur l'axe longitudinal du véhicule ego, alors TLC=T2b et DLCOR1 sera une estimation de la distance DLMES2b qui séparera le véhicule ego 10 du véhicule cible 20 à l'instant T2b,
- si le TLC est calculé comme étant l'instant où le véhicule cible 20 se situe entièrement sur la voie de circulation du véhicule ego, alors TLC=T3 et DLCOR1 sera une estimation de la distance DLMES3 qui séparera le véhicule ego 10 du véhicule cible 20 à l'instant T3,

A un instant t, la distance longitudinale corrigée peut être estimée à partir des paramètres de conduite du véhicule ego 10 et du véhicule cible 20, ces paramètres étant mesurés à l'instant t.

Le procédé calcule ainsi une distance longitudinale corrigée DLCOR(t) selon la formule

$$DLCOR(t) = maximum\ (0,\ DLMES(t)+VLR(t) \times TLC(t))$$

où :

DLMES(t) est la distance longitudinale mesurée à l'instant t entre le véhicule ego 10 et le véhicule cible 20,
VLR(t) est la vitesse longitudinale relative mesurée à l'instant t entre le véhicule ego 10 et le véhicule cible 20, et
TLC(t) est une estimation à l'instant t du délai avant franchissement de ligne.

La vitesse longitudinale relative VLR(t) mesurée entre le véhicule ego 10 et le véhicule cible 20 peut être positive ou négative. Ainsi, pour éviter d'obtenir une valeur négative lors du calcul de la distance longitudinale corrigée DLCOR, la fonction "maximum ()" est utilisée pour borner le résultat de ce calcul à la valeur minimale de 0.

Une distance longitudinale corrigée DLCOR(t) est ainsi calculée en temps réel afin d'être transmise à une troisième étape E3 de calcul d'une consigne de vitesse longitudinale VLC, applicable à l'instant t.

A chaque instant t, on calcule une distance longitudinale corrigée DLCOR(t) dépendant de la vitesse longitudinale relative VLR(t). La distance longitudinale corrigée DLCOR(t) ainsi calculée peut varier avec le temps si la vitesse longitudinale relative entre le premier et le deuxième véhicule varie. On obtient ainsi une estimation de la distance longitudinale corrigée DLCOR(t) qui sera d'autant plus précise que la vitesse longitudinale relative VLR(t) reste sensiblement constante au-delà de l'instant t. Selon une variante de réalisation de l'invention, la distance longitudinale corrigée DLCOR(t) pourrait également être calculée en fonction d'une accélération du premier véhicule et/ou du deuxième véhicule, mesurées ou calculées à l'instant t. De telles accélérations pourraient être intégrées sur une période de temps égale au délai TLC(t). Le calcul de la distance longitudinale corrigée DLCOR(t) pourrait ainsi être plus complexe mais également plus précis.

Dans un mode de réalisation de l'étape E3, la consigne de vitesse longitudinale VLC peut être calculée de sorte à établir et maintenir une distance longitudinale de référence DLR entre le véhicule ego 10 et la cible 20. Autrement dit, à partir de la distance longitudinale corrigée DLCOR, calculée dans l'étape E2, le procédé calcule la consigne de vitesse longitudinale VLC que le véhicule ego 10 doit appliquer afin que la distance longitudinale mesurée entre le véhicule ego 10 et le véhicule cible 20 soit égale à la distance longitudinale de référence DLR.

Dans ce mode de réalisation, la distance longitudinale de référence peut être calculée dans l'étape E3 en fonction de la distance longitudinale corrigée DLCOR et des paramètres de conduite du véhicule ego 10 et du véhicule cible 20. Avantageusement, les paramètres de conduite incluent la vitesse longitudinale du véhicule cible.

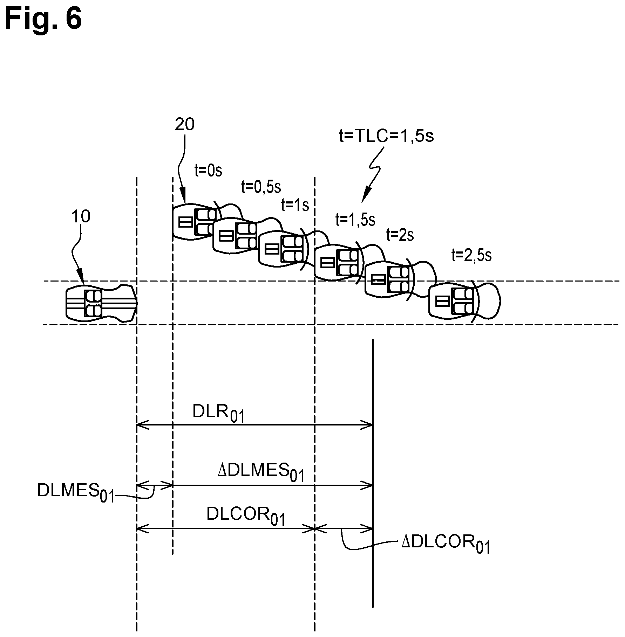

La figure 6 illustre le déroulement du procédé et l'évolution de la distance longitudinale corrigée lors d'une manœuvre d'insertion du véhicule cible 20 dans la voie du véhicule ego 10, dans le cas où la vitesse longitudinale relative VLR du véhicule cible 20 par rapport au véhicule ego 10 est strictement positive. Autrement dit, le véhicule cible 20 s'éloigne du véhicule ego 10 au cours de la manœuvre d'insertion.

Dans l'exemple représenté, la vitesse longitudinale relative VLR mesurée à t=0s est de 10 mètres par seconde.

A t=0s,

- Dans l'étape E1, on détecte un véhicule cible 20 ayant une intention d'effectuer une manœuvre d'insertion sur la voie du véhicule ego 10.
- Les deux véhicules évoluent dans deux voies distinctes et la distance longitudinale $DLMES_{01}$ mesurée entre le véhicule cible 20 et le véhicule ego 10 est de 5 mètres.
- Dans l'étape E2, on estime le délai avant franchissement TLC. Dans l'exemple de la figure 6 le délai avant franchissement TLC est estimé à 1,5s.
- Dans l'étape E2, on calcule une distance longitudinale corrigée,

$$DLCOR_{01} = 5 + 10 \times 1,5 = 20\ \text{mètres}.$$

$DLCOR_{01} = 5 + 10 \times 1,5 = 20$ mètres.
- Dans l'étape E3, on prend en compte la distance longitudinale corrigée pour calculer une vitesse longitudinale de consigne $VLC_{01}$ permettant d'établir une distance longitudinale de référence entre les deux véhicules. Dans la figure 6, on fait l'hypothèse que la distance longitudinale de référence $DLR_{01}$ calculée à l'instant t=0s est égale à 25 mètres afin d'illustrer l'effet de l'invention. Avec la mise en œuvre du procédé, la régulation de la vitesse longitudinale du véhicule ego 10 à t=0 sera calibrée en fonction de l'écart $\Delta DLCOR_{01}$ entre la distance longitudinale corrigée $DLCOR_{01}$ et la distance longitudinale de référence $DLR_{01}$. Autrement dit, la régulation de la vitesse longitudinale du véhicule ego 10 sera calibrée pour faire évoluer la distance longitudinale corrigée DLCOR de 20 mètres à 25 mètres entre les instants t=0 et t=TLC=1,5s, ce qui correspond à un ralentissement modéré. Sans la mise en œuvre du procédé, à t=0s, la régulation de la vitesse longitudinale du véhicule ego 10 aurait été calibrée en fonction de l'écart $\Delta DLMES_{01}$ entre la distance longitudinale mesurée $DLMES_{01}$ et la distance longitudinale de référence $DLR_{01}$. Autrement dit, la régulation de la vitesse longitudinale du véhicule ego 10 aurait été calibrée pour faire évoluer la distance longitudinale mesurée DLMES de 5 mètres à 25 mètres entre les instants t=0 et t=TLC=1,5s, ce qui correspond à un fort ralentissement.

Ainsi, dans le cas où le véhicule cible 20 s'éloigne du véhicule ego 10 lors de la manœuvre d'insertion, la mise en œuvre du procédé permet d'éviter les à-coups liés à la régulation longitudinale sur une cible en début de manœuvre d'insertion. La mise en œuvre du procédé permet donc d'améliorer le confort de conduite.

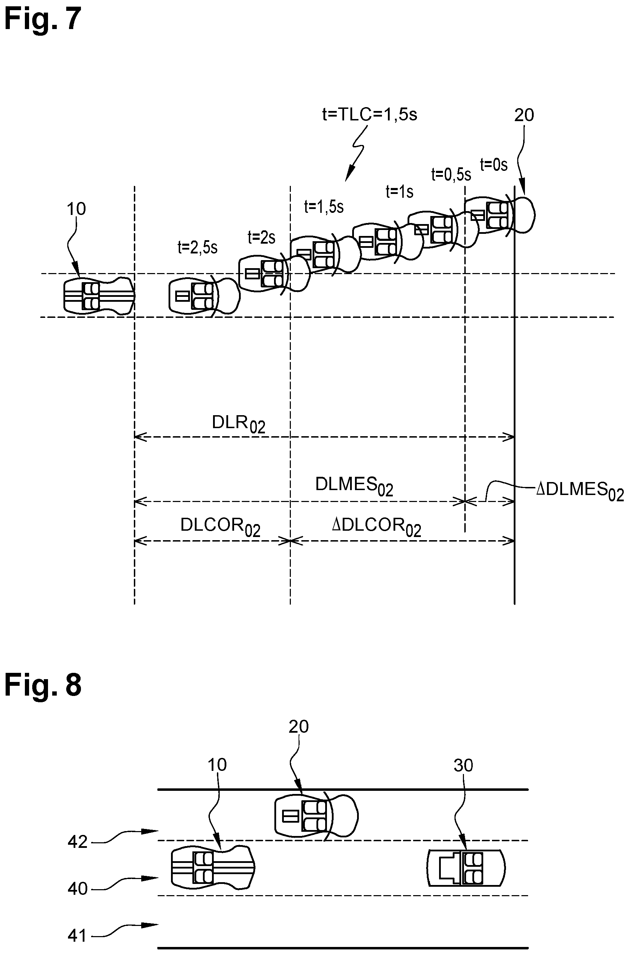

La figure 7 illustre le déroulement du procédé et l'évolution de la distance longitudinale corrigée lors d'une manœuvre d'insertion du véhicule cible 20 dans la voie du véhicule ego 10, dans le cas où la vitesse longitudinale relative VLR du véhicule cible 20 par rapport au véhicule ego 10 est strictement négative. Autrement dit, le véhicule cible 20 se rapproche du véhicule ego 10 lors de la manœuvre d'insertion.

Dans l'exemple représenté, la vitesse longitudinale relative VLR mesurée à t=0s est de -5 mètres par seconde.

A t=0s,

- Dans l'étape E1, on détecte un véhicule cible 20 ayant une intention d'effectuer une manœuvre d'insertion sur la voie du véhicule ego 10.
- Les deux véhicules évoluent dans deux voies distinctes et la distance longitudinale $DLMES_{02}$ mesurée entre le véhicule cible 20 et le véhicule ego 10 est de 20 mètres.
- Dans l'étape E2, le procédé estime le délai avant franchissement TLC. Dans l'exemple de la figure 7, le délai avant franchissement TLC est estimé à 1,5s.
- Dans l'étape E2, on calcule une distance longitudinale corrigée,

$$DLCOR_{02} = 20 + (-5)x1,5 = 12,5 \text{ mètres.}$$

- Dans l'étape E3, on prend en compte la distance longitudinale corrigée $DLCOR_{02}$ pour calculer une vitesse longitudinale de consigne VLC permettant d'établir une distance longitudinale de référence entre les deux véhicules. Dans la figure 7, on fait l'hypothèse que la distance longitudinale de référence $DLR_{02}$ calculée à l'instant t=0s est égale à 25 mètres afin d'illustrer l'effet de l'invention. Avec la mise en œuvre du procédé, la régulation de la vitesse longitudinale du véhicule ego 10 à t=0 sera calibrée en fonction de l'écart $\Delta DLCOR_{02}$ entre la distance longitudinale corrigée $DLCOR_{02}$ et la distance longitudinale de référence $DLR_{02}$. Autrement dit, la régulation de la vitesse longitudinale du véhicule ego 10 sera calibrée pour faire évoluer la distance longitudinale corrigée DLCOR de 12,5 mètres à 25 mètres entre les instants t=0 et t=TLC=1,5s, ce qui correspond à un fort ralentissement. Sans la mise en œuvre du procédé, à t=0s, la régulation de la vitesse longitudinale du véhicule ego 10 aurait été calibrée en fonction de l'écart $\Delta DLMES_{02}$ entre la distance longitudinale mesurée $DLMES_{02}$ et la distance longitudinale de référence $DLR_{02}$. Autrement dit, la régulation de la vitesse longitudinale du véhicule ego 10 aurait été calibrée pour faire évoluer la distance longitudinale mesurée DLMES de 20 mètres à 25 mètres entre les instants t=0 et t=TLC=1,5s, ce qui correspond à un ralentissement trop faible, voire une absence de ralentissement pour anticiper le rapprochement du véhicule cible. Ce ralentissement trop faible aurait donc dû être suivi d'un ralentissement brutal pour éviter une collision avec le véhicule cible.

Dans le cas décrit par la figure 7, la manœuvre d'insertion peut être dangereuse. Le rôle du procédé est ici d'améliorer la sécurité du véhicule, c'est-à-dire de ralentir précocement et fortement le véhicule ego pour anticiper le rapprochement du véhicule cible.

On comprend donc que le procédé peut comprendre une étape de comparaison de la vitesse du véhicule ego et de la vitesse du deuxième véhicule. La consigne de vitesse longitudinale calculée lors de la troisième étape E3 est une consigne de décélération faible si la vitesse du deuxième véhicule est strictement supérieure à la vitesse du véhicule ego. La consigne de vitesse longitudinale est une consigne de décélération forte si la vitesse du deuxième véhicule est strictement inférieure à la vitesse du véhicule ego. L'amplitude (ou valeur absolue) de la décélération faible est strictement inférieure à l'amplitude de la décélération forte.

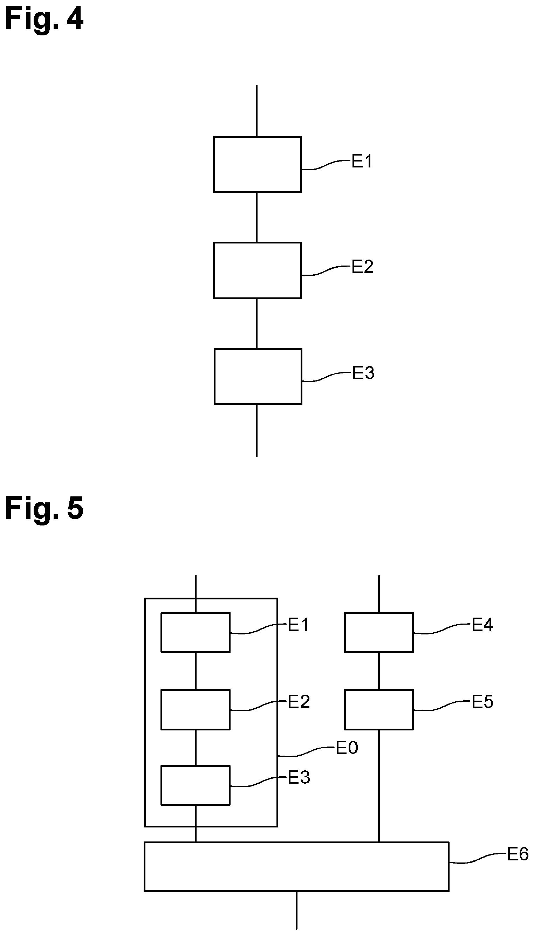

Un deuxième mode d'exécution d'un procédé de gestion automatisée de la vitesse longitudinale est décrit ci-après en référence à la figure 4. Ce deuxième mode d'exécution du procédé comprend quatre étapes E0, E4, E5 et E6.

Ce mode d'exécution concerne la mise en œuvre du procédé de gestion automatisée de la vitesse longitudinale dans un contexte de guidage longitudinal multicible. En particulier ce mode d'exécution décrit la mise en œuvre du procédé dans une configuration de trafic représentée dans la figure 8.

La configuration de trafic représenté dans la figure 8 est telle que :,

- le véhicule ego 10, ou premier véhicule, est positionné sur la voie centrale 40 d'une autoroute à trois voies,
- un deuxième véhicule 20 circule sur une voie adjacente 41, 42,
- un troisième véhicule 30 circule sur la voie du véhicule ego et au-devant de lui,
- le deuxième véhicule 20 effectue une manœuvre d'insertion sur la voie centrale, entre le véhicule ego et le troisième véhicule 30.

L'étape E0 est constituée de trois sous étapes, E1, E2 et E3. Les sous-étapes E1, E2 et E3 du deuxième mode d'exécution sont respectivement similaires aux étapes E1, E2 et E3 précédemment détaillées pour le premier mode d'exécution.

Durant l'étape E0 le procédé détecte donc la manœuvre d'insertion du deuxième véhicule 20 et calcule une première vitesse longitudinale de référence en fonction d'un calcul d'une distance longitudinale corrigée entre le véhicule ego 10 et le deuxième véhicule 20.

En parallèle avec le déroulement de l'étape E0, dans une étape E4 le procédé détecte un troisième véhicule 30.

Dans une étape E5 le procédé calcule une deuxième vitesse longitudinale de référence du véhicule ego en fonction de la vitesse du troisième véhicule 30.

Les première et la deuxième vitesses longitudinales de référence sont ensuite traitées dans une étape E6.

Dans l'étape E6, le procédé calcule la consigne de vitesse longitudinale du véhicule ego permettant de maintenir une distance longitudinale minimale donnée entre le véhicule ego 10 et les deuxième et troisième véhicule 20, 30.

La consigne de vitesse longitudinale du véhicule ego sera calculée en sélectionnant la vitesse longitudinale minimale parmi les première et deuxième vitesses longitudinales de référence calculées lors des étapes E0 et E5.

De cette façon, le procédé se retrouve en configuration de guidage sur la cible présentant la vitesse longitudinale de référence la plus contraignante.

## Revendications

1. Procédé de gestion automatisée de la vitesse longitudinale d'un premier véhicule (10) circulant sur une première voie (40), comprenant :

   - une première étape (E1) de détection d'une intention d'un deuxième véhicule (20) circulant sur une deuxième voie (41) adjacente à la première voie (40) d'effectuer une manœuvre d'insertion sur la première voie (40),
   - une deuxième étape (E2) d'estimation d'une distance longitudinale corrigée (DLCOR), ladite distance longitudinale corrigée correspondant à la distance longitudinale qui séparera le premier véhicule (10) du deuxième véhicule (20) à la fin de la manœuvre d'insertion, ladite distance longitudinale corrigée étant calculée en fonction d'une distance longitudinale mesurée (DLMES) entre le premier véhicule et le deuxième véhicule, et en fonction d'une vitesse longitudinale relative (VLR) mesurée entre le deuxième véhicule (20) et le premier véhicule (10),
   - une troisième étape (E3) de calcul d'une consigne de vitesse longitudinale du premier véhicule en fonction de la distance longitudinale corrigée (DLCOR),
   la première étape (E1) de détection comprenant une sous-étape (E11) de calcul d'un délai avant franchissement de ligne (TLC), puis une sous-étape (E12) de comparaison du délai avant franchissement de ligne avec un seuil prédéfini,
   ladite distance longitudinale corrigée (DLCOR) calculée lors de la deuxième étape (E2) étant fonction du délai avant franchissement (TLC).

2. Procédé de gestion automatisée de la vitesse longitudinale du premier véhicule (10) selon la revendication précédente, **caractérisé en ce que** ladite distance longitudinale corrigée (DLCOR) calculée lors de la deuxième étape (E2) est égale à la somme de la distance longitudinale mesurée (DLMES) et du produit de la vitesse longitudinale relative mesurée (VLR) par le délai avant franchissement (TLC).

3. Procédé de gestion automatisée de la vitesse longitudinale du premier véhicule (10) selon l'une des revendications précédentes, **caractérisé en ce que** la première étape (E1) de détection comprend une sous-étape (E13) de détection d'indicateurs visuels sur le deuxième véhicule signalant une manœuvre d'insertion, notamment une détection d'un usage de feux clignotants.

4. Procédé de gestion automatisée de la vitesse longitudinale du premier véhicule (10) selon l'une des revendications précédentes, **caractérisé en ce qu'**il comprend une étape de comparaison de la vitesse du premier véhicule et de la vitesse du deuxième véhicule et **en ce que** :

- la consigne de vitesse longitudinale calculée lors de ladite troisième étape est une consigne de décélération forte si la vitesse du deuxième véhicule est strictement inférieure à la vitesse du premier véhicule, et **en ce que**
- la consigne de vitesse longitudinale calculée lors de ladite troisième étape est une consigne de décélération faible si la vitesse du deuxième véhicule est strictement supérieure à la vitesse du premier véhicule.

5. Procédé de gestion automatisée de la vitesse longitudinale du premier véhicule (10) selon l'une des revendications précédentes; **caractérisé en ce qu'**il comprend :

   - une étape (E0) de calcul d'une première vitesse longitudinale de référence en fonction de la distance longitudinale corrigée (DLCOR),
   - une étape (E4) de détection d'au moins un troisième véhicule (30) dans un trafic environnant le premier véhicule,
   - une étape de calcul d'au moins une deuxième vitesse longitudinale de référence en fonction de la vitesse de l'au moins troisième véhicule (30),

   et **en ce que** la consigne de vitesse longitudinale calculée lors de la troisième étape (E6) est égale au minimum entre la première vitesse longitudinale de référence et l'au moins deuxième vitesse longitudinale de référence.

6. Procédé de gestion automatisée de la vitesse longitudinale du premier véhicule (10) selon la revendication précédente, **caractérisé en ce que** le deuxième véhicule et l'au moins troisième véhicule sont situés à l'avant du premier véhicule.

7. Dispositif (1) de gestion automatisée de la vitesse longitudinale d'un véhicule (10), le dispositif comprenant des éléments (1, 2, 3, 4, 5, 6, 9) matériels et/ou logiciels mettant en œuvre un procédé selon l'une des revendications 1 à 6.

8. Véhicule automobile (10) comprenant un dispositif (1) de gestion automatisée de la vitesse longitudinale d'un véhicule (10) selon la revendication précédente.

9. Produit programme d'ordinateur comprenant des instructions de code de programme enregistrées sur un support lisible par ordinateur pour mettre en œuvre les étapes du procédé selon l'une quelconque des revendications 1 à 6 lorsque ledit programme fonctionne sur un ordinateur.

10. Support d'enregistrement de données, lisible par un ordinateur, sur lequel est enregistré un programme d'ordinateur comprenant des instructions de code de programme de mise en œuvre du procédé selon l'une des revendications 1 à 6.

**Patentansprüche**

1. Verfahren zur automatisierten Steuerung der Längsgeschwindigkeit eines ersten Fahrzeugs (10), das auf einer ersten Spur (40) fährt, umfassend:

   - einen ersten Schritt (E1) des Detektierens einer Absicht eines zweiten Fahrzeugs (20), das auf einer zweiten Fahrspur (41) neben der ersten Fahrspur (40) fährt, ein Einfädelmanöver auf die erste Fahrspur (40) durchzuführen;
   - einen zweiten Schritt (E2) des Schätzens eines korrigierten Längsabstands (DLCOR), wobei der korrigierte Längsabstand dem Längsabstand entspricht, der das erste Fahrzeug (10) von dem zweiten Fahrzeug (20) am Ende der Einfädelmanövers trennt, wobei der korrigierte Längsabstand in Abhängigkeit von einem gemessenen Längsabstand (DLMES) zwischen dem ersten Fahrzeug und dem zweiten Fahrzeug und in Abhängigkeit von einer gemessenen relativen Längsgeschwindigkeit (VLR) zwischen dem zweiten Fahrzeug (20) und dem ersten Fahrzeug (10) berechnet wird,
   - einen dritten Schritt (E3) des Berechnens eines Längsgeschwindigkeitssollwerts des ersten Fahrzeugs in Abhängigkeit von dem korrigierten Längsabstand (DLCOR), wobei der erste Schritt (E1) des Detektierens einen Teilschritt (E11) des Berechnens einer Zeit vor dem Überqueren einer Linie (TLC), dann einen Teilschritt (E12) des Vergleichens der Zeit vor dem Überqueren der Linie mit einem vordefinierten Schwellenwert umfasst, wobei der bei dem zweiten Schritt (E2) berechnete korrigierte Längsabstand (DLCOR) von der Zeit vor dem Überqueren (TLC) abhängt.

2. Verfahren zur automatisierten Steuerung der Längsgeschwindigkeit des ersten Fahrzeugs (10) nach dem vorhergehenden Anspruch, **dadurch gekennzeichnet, dass** der bei dem zweiten Schritt (E2) berechnete korrigierte Längsabstand (DLCOR) gleich der Summe aus dem gemessenen Längsabstand (DLMEs) und dem Produkt aus der gemessenen relativen Längsgeschwindigkeit (VLR) und der Zeit vor dem Überqueren (TLC) ist.

3. Verfahren zur automatisierten Steuerung der Längsgeschwindigkeit des ersten Fahrzeugs (10) nach einem der vorhergehenden Ansprüche, **dadurch gekennzeichnet, dass** der erste Schritt (E1) des Detektierens einen Teilschritt (E13) des Detektierens von visuellen Indikatoren an dem zweiten Fahrzeug umfasst, die ein Einfädelmanöver signalisieren, insbesondere ein Detektieren einer Verwendung von Blinkleuchten.

4. Verfahren zur automatisierten Steuerung der Längsgeschwindigkeit des ersten Fahrzeugs (10) nach einem der vorhergehenden Ansprüche, **dadurch gekennzeichnet, dass** es einen Schritt des Vergleichens der Geschwindigkeit des ersten Fahrzeugs und der Geschwindigkeit des zweiten Fahrzeugs umfasst, und dass:

   - der bei dem dritten Schritt berechnete Längsgeschwindigkeitssollwert ein Sollwert für starke Verzögerung ist, wenn die Geschwindigkeit des zweiten Fahrzeugs strikt geringer als die Geschwindigkeit des ersten Fahrzeugs ist, und dass
   - der bei dem dritten Schritt berechnete Längsgeschwindigkeitssollwert ein Sollwert für geringe Verzögerung ist, wenn die Geschwindigkeit des zweiten Fahrzeugs strikt höher als die Geschwindigkeit des ersten Fahrzeugs ist.

5. Verfahren zur automatisierten Steuerung der Längsgeschwindigkeit des ersten Fahrzeugs (10) nach einem der vorhergehenden Ansprüche, **dadurch gekennzeichnet, dass** es umfasst:

   - einen Schritt (E0) des Berechnens einer ersten Referenzlängsgeschwindigkeit in Abhängigkeit von dem korrigierten Längsabstand (DLCOR),
   - einen Schritt (E4) des Detektierens mindestens eines dritten Fahrzeugs (30) in einem das erste Fahrzeug umgebenden Verkehr,
   - einen Schritt des Berechnens mindestens einer zweiten Referenzlängsgeschwindigkeit in Abhängigkeit von der Geschwindigkeit des mindestens einen dritten Fahrzeugs (30),

   und dass der bei dem dritten Schritt (E6) berechnete Längsgeschwindigkeitssollwert gleich dem Minimum zwischen der ersten Referenzlängsgeschwindigkeit und der mindestens einen zweiten Referenzlängsgeschwindigkeit ist.

6. Verfahren zur automatisierten Steuerung der Längsgeschwindigkeit des ersten Fahrzeugs (10) nach dem vorhergehenden Anspruch, **dadurch gekennzeichnet, dass** sich das zweite Fahrzeug und das mindestens eine dritte Fahrzeug vor dem ersten Fahrzeugs befinden.

7. Vorrichtung (1) zur automatisierten Steuerung der Längsgeschwindigkeit eines Fahrzeugs (10), wobei die Vorrichtung Hardware- und/oder Softwareelemente (1, 2, 3, 4, 5, 6, 9) umfasst, die ein Verfahren nach einem der Ansprüche 1 bis 6 durchführen.

8. Kraftfahrzeug (10), das eine Vorrichtung (1) zur automatisierten Steuerung der Längsgeschwindigkeit eines Fahrzeugs (10) nach dem vorhergehenden Anspruch umfasst.

9. Computerprogrammprodukt, das Programmcodeanweisungen umfasst, die auf einem computerlesbaren Medium gespeichert sind, um die Schritte des Verfahrens nach einem der Ansprüche 1 bis 6 durchzuführen, wenn das Programm auf einem Computer läuft.

10. Computerlesbares Datenspeichermedium, auf dem ein Computerprogramm gespeichert ist, das Programmcodeanweisungen zur Durchführung des Verfahrens nach einem der Ansprüche 1 bis 6 umfasst.

**Claims**

1. Method for the automated management of the longitudinal speed of a first vehicle (10) traveling in a first lane (40), comprising:

   - a first step (E1) of detecting an intention of a second vehicle (20) traveling in a second lane (41) adjacent to the first lane (40) to perform a cut-in maneuver into the first lane (40),

- a second step (E2) of estimating a corrected longitudinal distance (DLCOR), said corrected longitudinal distance corresponding to the longitudinal distance that will separate the first vehicle (10) from the second vehicle (20) at the end of the cut-in maneuver, said corrected longitudinal distance being computed based on a longitudinal distance (DLMES) measured between the first vehicle and the second vehicle, and based on a relative longitudinal speed (VLR) measured between the second vehicle (20) and the first vehicle (10),
- a third step (E3) of computing a longitudinal speed setpoint for the first vehicle based on the corrected longitudinal distance (DLCOR), the first detection step (E1) comprising a sub-step (E11) of computing a time to line crossing (TLC), and then a sub-step (E12) of comparing the time to line crossing with a predefined threshold, said corrected longitudinal distance (DLCOR) computed in the second step (E2) depending on the time to crossing (TLC).

2. Method for the automated management of the longitudinal speed of the first vehicle (10) according to the preceding claim, **characterized in that** said corrected longitudinal distance (DLCOR) computed in the second step (E2) is equal to the sum of the measured longitudinal distance (DLMES) and the product of the measured relative longitudinal speed (VLR) and the time to crossing (TLC).

3. Method for the automated management of the longitudinal speed of the first vehicle (10) according to either of the preceding claims, **characterized in that** the first detection step (E1) comprises a sub-step (E13) of detecting visual indicators on the second vehicle signaling a cut-in maneuver, in particular detection of the use of flashing lights.

4. Method for the automated management of the longitudinal speed of the first vehicle (10) according to one of the preceding claims, **characterized in that** it comprises a step of comparing the speed of the first vehicle and the speed of the second vehicle, and **in that**:

- the longitudinal speed setpoint computed in said third step is a strong deceleration setpoint if the speed of the second vehicle is strictly less than the speed of the first vehicle, and **in that**
- the longitudinal speed setpoint computed in said third step is a weak deceleration setpoint if the speed of the second vehicle is strictly greater than the speed of the first vehicle.

5. Method for the automated management of the longitudinal speed of the first vehicle (10) according to one of the preceding claims, **characterized in that** it comprises:

- a step (E0) of computing a first reference longitudinal speed based on the corrected longitudinal distance (DLCOR),
- a step (E4) of detecting at least one third vehicle (30) in traffic around the first vehicle,
- a step of computing at least one second reference longitudinal speed based on the speed of the at least one third vehicle (30),

and **in that** the longitudinal speed setpoint computed in the third step (E6) is equal to the minimum of the first reference longitudinal speed and the at least one second reference longitudinal speed.

6. Method for the automated management of the longitudinal speed of the first vehicle (10) according to the preceding claim, **characterized in that** the second vehicle and the at least one third vehicle are situated ahead of the first vehicle.

7. Device (1) for the automated management of the longitudinal speed of a vehicle (10), the device comprising hardware and/or software elements (1, 2, 3, 4, 5, 6, 9) implementing a method according to one of Claims 1 to 6.

8. Motor vehicle (10) comprising a device (1) for the automated management of the longitudinal speed of a vehicle (10) according to the preceding claim.

9. Computer program product comprising program code instructions recorded on a computer-readable medium for implementing the steps of the method according to any one of Claims 1 to 6 when said program runs on a computer.

10. Computer-readable data recording medium on which is recorded a computer program comprising program code instructions for implementing the method according to one of Claims 1 to 6.

# Fig. 1

# Fig. 2

# Fig. 3

# Fig. 4

E1

E2

E3

# Fig. 5

E1

E2

E0

E3

E4

E5

E6

# Fig. 6

# Fig. 7

$t=TLC=1,5s$

20

10

$t=0s$

$t=0,5s$

$t=1s$

$t=1,5s$

$t=2s$

$t=2,5s$

$DLR_{02}$

$DLMES_{02}$

$\Delta DLMES_{02}$

$DLCOR_{02}$

$\Delta DLCOR_{02}$

# Fig. 8

20

10

30

42

40

41

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 112018001201 T5

- US 2017305422 A1